# EUROPEAN PATENT APPLICATION

(11) **EP 4 783 489 A1**
(43) Date of publication of application: **29.07.2026**
(21) Application number: 24881341.2
(22) Date of filing: 24.09.2024
(51) Int. Cl.: H04B 17/309

(54) **BEAM MEASUREMENT METHOD AND APPARATUS FOR THREE-DIMENSIONAL ANTENNA ARRAY**

(30) Priority: 27.10.2023 CN 202311427059
(71) Applicant: HUAWEI TECHNOLOGIES CO., LTD., Shenzhen, Guangdong 518129 (CN)
(72) Inventor: LI, Ting, Shenzhen, Guangdong 518129 (CN); WANG, Tengjiao, Shenzhen, Guangdong 518129 (CN); WANG, Jie, Shenzhen, Guangdong 518129 (CN); SHANG, Peng, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Pfenning, Meinig & Partner mbB
(86) International application number: PCT/CN2024/120592
(87) International publication number: WO 2025/086975

(57) **Abstract**

This application discloses a beam measurement method for a three-dimensional antenna array and an apparatus. The method includes: sending reference signals corresponding to N reference signal resources, where the reference signals are used for beam measurement, the N reference signal resources are in a one-to-one correspondence with N beams, and N is an integer greater than 1; receiving first indication information, where the first indication information indicates a first reference signal resource, and the N reference signal resources include the first reference signal resource; sending reference signals corresponding to M reference signal resources based on the first indication information, where the M reference signal resources are in a one-to-one correspondence with M beams, and M is a positive integer; and receiving second indication information, where the second indication information indicates a second reference signal resource, and the second reference signal resource is one of the first reference signal resource and the M reference signal resources. **In** the method, the first indication information may be used for a second round of beam measurement, thereby reducing reference signal resources for beam measurement of the three-dimensional antenna array and lowering measurement overhead.

## Description

This application claims priority to Chinese Patent Application No. 202311427059.4, filed with the China National Intellectual Property Administration on October 27, 2023 and entitled "BEAM MEASUREMENT METHOD FOR THREE-DIMENSIONAL ANTENNA ARRAY AND APPARATUS", which is incorporated herein by reference in its entirety.

### TECHNICAL FIELD

Embodiments of this application relate to the field of communication technologies, and in particular, to a beam measurement method for a three-dimensional antenna array and an apparatus.

### BACKGROUND

To reduce hardware complexity, cost, and power consumption while improving cost-effectiveness of a MIMO system, the MIMO system usually employs hybrid beamforming (Hybrid Beamforming, HBF), which combines an analog beam domain and a digital port. In HBF, a single radio frequency channel may drive a plurality of antenna elements through a phase-shifting network, where a plurality of analog phase shifters adjust signals for each transmit antenna element. To achieve optimal link transmission performance in HBF, full-space analog beam polling is usually employed for beam measurement. However, when a larger quantity of beams need to be measured, this approach requires significant reference signal resources for beam measurement, resulting in high measurement overhead.

To improve system capacity and spectral efficiency, the MIMO system may further employ a three-dimensional antenna array. The three-dimensional antenna array arranges antenna elements both in-plane and out-of-plane, allowing more antenna elements in a same antenna array area than a two-dimensional antenna array. Current beam measurement methods (for example, the foregoing full-space analog beam polling) are all tailored for planar two-dimensional antenna arrays and would demand excessive reference signal resources if applied to three-dimensional antenna arrays, resulting in high measurement overhead.

### SUMMARY

Embodiments of this application disclose a beam measurement method for a three-dimensional antenna array and an apparatus, which can reduce reference signal resources required for beam measurement of the three-dimensional antenna array and lower measurement overhead.

The following describes this application from different aspects. It should be understood that mutual reference may be made to the following implementations and beneficial effects of different aspects.

According to a first aspect, this application discloses a beam measurement method for a three-dimensional antenna array. The method may be performed by a network device or a module (for example, a chip) in the network device. The method may include: sending reference signals corresponding to N reference signal resources, where the reference signals are used for beam measurement, the N reference signal resources are in a one-to-one correspondence with N beams, and N is an integer greater than 1; receiving first indication information, where the first indication information indicates a first reference signal resource, and the N reference signal resources include the first reference signal resource; sending reference signals corresponding to M reference signal resources based on the first indication information, where the M reference signal resources are in a one-to-one correspondence with M beams, and M is a positive integer; and receiving second indication information, where the second indication information indicates a second reference signal resource, and the second reference signal resource is one of the first reference signal resource and the M reference signal resources.

In an embodiment of this application, the reference signals corresponding to the M reference signal resources may be sent based on the first indication information determined from a first round of beam measurement, and then the second reference signal resource is determined from the first reference signal resource and the M reference signal resources. In the method, since the first indication information is a measurement result of the first round of beam measurement, determining the M beams for a second round of beam measurement based on the measurement result of the first round of beam measurement can reduce a quantity of reference signals used in beam measurement for the three-dimensional antenna array, thereby lowering reference signal resources overhead.

With reference to the first aspect, in a possible implementation, the N reference signal resources and the M reference signal resources are different reference signal resources.

With reference to the first aspect, in a possible implementation, the N beams have a same first characteristic but a different second characteristic, and the M beams have a different first characteristic but a same second characteristic.

In this embodiment of this application, because beam measurement is performed in two rounds, a dimensional characteristic (for example, the first characteristic) of a beam may be measured in the first round, and another dimensional characteristic (for example, the second characteristic) of the beam may be measured in the second round. In this case, the first indication information may indicate a characteristic result of a dimension of the beam measured in the first round. Using the first indication information to select beams for the second round of beam measurement can reduce a quantity of beams for beam measurement thereby lowering overhead of reference signal resources for beam measurement.

In a possible implementation, the second characteristic of the M beams is one of the second characteristics of the N beams.

In this embodiment of this application, a beam corresponding to the first reference signal resource has a second characteristic that is one of the second characteristics of the N beams. In other words, a second characteristic, namely, the second characteristic corresponding to the first reference signal resource, is determined through the first round of measurement of the N beams. In the second round of measurement, only beams that have a different first characteristic but the same second characteristic as the beam corresponding to the first reference signal resource need to be measured. Beams that do not have the second characteristic do not need to be measured, lowering overhead of reference signal resources for beam measurement.

With reference to the first aspect, in a possible implementation, the first characteristic is beam direction, and the second characteristic is beam shape.

In this embodiment of this application, because the three-dimensional antenna array may provide a beam with characteristics in different dimensions, namely, beam direction and beam shape, beam measurement is performed in two rounds. In the first round, a dimensional characteristic (namely, beam direction) of the beam may be measured to determine a target beam direction. In the second round, with the target beam direction fixed, the other dimensional characteristic (namely, beam shape) of the beam is measured to determine a target beam shape. According to the method, beams that do not have the target beam direction but have different beam shapes do not need to be measured in the second round of measurement. This reduces a quantity of measured reference signals and lowers reference signal resource overhead.

With reference to the first aspect, in a possible implementation, the first characteristic is beam shape, and the second characteristic is beam direction.

In this embodiment of this application, because the three-dimensional antenna array may provide a beam with characteristics in different dimensions, namely, beam direction and beam shape, beam measurement is performed in two rounds. In the first round, a dimensional characteristic (namely, beam shape) of the beam may be measured to determine a target beam shape. In the second round, with the target beam shape fixed, the other dimensional characteristic (namely, beam direction) of the beam is measured to determine a target beam direction. According to the method, beams that do not have the target beam shape but have different beam directions do not need to be measured in the second round of measurement. This reduces a quantity of measured reference signals and lowers reference signal resource overhead.

With reference to the first aspect, in a possible implementation, the first reference signal resource is determined based on signal quality of the reference signals corresponding to the N reference signal resources.

For example, the signal quality may be a metric, for example, reference signal received power (Reference signal received power, RSRP), reference signal energy, or a signal-to-noise ratio.

With reference to the first aspect, in a possible implementation, the second reference signal resource is determined based on signal quality of the reference signals corresponding to the M reference signal resources and signal quality of a reference signal corresponding to the first reference signal resource.

With reference to the first aspect, in a possible implementation, the reference signal is either a channel state information reference signal CSI-RS or a synchronization signal and physical broadcast channel block SSB.

With reference to the first aspect, in a possible implementation, the first indication information is a resource number of the first reference signal resource, and the second indication information is a resource number of the second reference signal resource.

According to a second aspect, this application discloses a beam measurement method for a three-dimensional antenna array. The method may be performed by a terminal device or a module (for example, a chip) in the terminal device. The method may include: the beam measurement method for the three-dimensional antenna array including:
receiving reference signals corresponding to N reference signal resources, where the reference signals are used for beam measurement, the N reference signal resources are in a one-to-one correspondence with N beams, and N is an integer greater than 1;
sending first indication information, where the first indication information indicates a first reference signal resource, and the N reference signal resources include the first reference signal resource;
receiving reference signals corresponding to M reference signal resources, where the M reference signal resources are in a one-to-one correspondence with M beams, and M is a positive integer; and
sending second indication information, where the second indication information indicates a second reference signal resource, and the second reference signal resource is one of the first reference signal resource and the M reference signal resources.

With reference to the second aspect, in a possible implementation, the N reference signal resources and the M reference signal resources are different reference signal resources.

With reference to the second aspect, in a possible implementation, the N beams have a same first characteristic but a different second characteristic, and the M beams have a different first characteristic but a same second characteristic.

With reference to the second aspect, in a possible implementation, the first characteristic is beam direction, and the second characteristic is beam shape.

With reference to the second aspect, in a possible implementation, the first characteristic is beam shape, and the second characteristic is beam direction.

With reference to the second aspect, in a possible implementation, the first reference signal resource is determined based on signal quality of the reference signals corresponding to the N reference signal resources.

With reference to the second aspect, in a possible implementation, the second reference signal resource is determined based on signal quality of the reference signals corresponding to the M reference signal resources and signal quality of a reference signal corresponding to the first reference signal resource.

With reference to the second aspect, in a possible implementation, the reference signal is either a channel state information reference signal CSI-RS or a synchronization signal and physical broadcast channel block SSB.

With reference to the second aspect, in a possible implementation, the first indication information is a resource number of the first reference signal resource, and the second indication information is a resource number of the second reference signal resource.

According to a third aspect, this application provides a communication apparatus. The communication apparatus may be a network device or a chip/circuit in the network device. The communication apparatus is configured to perform the method according to the first aspect or any possible implementation of the first aspect. The communication apparatus includes units for performing the method according to the first aspect or any possible implementation of the first aspect.

According to a fourth aspect, this application provides a communication apparatus. The communication apparatus may be a terminal device or a chip/circuit in the terminal device. The communication apparatus is configured to perform the method according to the second aspect or any possible implementation of the second aspect. The communication apparatus includes units for performing the method according to the second aspect or any possible implementation of the second aspect.

In the third aspect or the fourth aspect, the communication apparatus may include a receiving unit and a sending unit. For a specific description of the receiving unit and the sending unit, refer to apparatus embodiments described below. For beneficial effects of the third aspect and the fourth aspect, refer to related descriptions of the first aspect and the second aspect. Details are not described herein again.

According to a fifth aspect, this application provides a communication apparatus. The communication apparatus may include a processor and an interface circuit. The processor is connected to the interface circuit. The interface circuit is configured to exchange (or receive/send or input/output) information or data, the processor is configured to run program instructions, and the communication apparatus is enabled to perform the method according to the first aspect, the second aspect, or any possible implementation of the first aspect or the second aspect. The interface circuit may be a communication interface or a transceiver. The transceiver may be a radio frequency module in the communication apparatus, a combination of a radio frequency module and an antenna, or an input/output interface of a chip or a circuit.

According to a sixth aspect, this application provides a readable storage medium. The readable storage medium stores program instructions. When the program instructions are run on a computer, the computer is enabled to perform the method according to the first aspect, the second aspect, or any possible implementation of the first aspect or the second aspect.

According to a seventh aspect, this application provides a program product including program instructions. When the program product runs, the method according to the first aspect, the second aspect, or any possible implementation of the first aspect or the second aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform an information interaction method provided in one or more of the first aspect, the second aspect, or any possible implementation of the first aspect or the second aspect. Optionally, the apparatus further includes the memory, and the memory is connected to the processor through a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory and the processor may be integrated together.

According to a ninth aspect, this application provides a communication system. The communication system includes a network device and a terminal device. The network device is configured to perform the method according to the first aspect or any possible implementation of the first aspect. The terminal device is configured to perform the method according to the second aspect or any possible implementation of the second aspect.

For technical effects achieved in the foregoing aspects, mutual reference may be made to the foregoing aspects, or reference may be made to beneficial effects in the following method embodiments. Details are not described herein.

### BRIEF DESCRIPTION OF DRAWINGS

FIG. 1 is a diagram of an HBF method according to an embodiment of this application;
FIG. 2 is a diagram of beam measurement according to an embodiment of this application;
FIG. 3 is a diagram of a three-dimensional antenna array according to an embodiment of this application;
FIG. 4A is a diagram of a network architecture of a communication system according to an embodiment of this application;
FIG. 4B is a diagram of a network architecture of another communication system according to an embodiment of this application;
FIG. 5 is a schematic flowchart of a beam measurement method for a three-dimensional antenna array according to an embodiment of this application;
FIG. 6A and FIG. 6B are a schematic flowchart of a beam measurement method for another three-dimensional antenna array according to an embodiment of this application;
FIG. 7A and FIG. 7B are a schematic flowchart of a beam measurement method for still another three-dimensional antenna array according to an embodiment of this application;
FIG. 8 is a diagram of a structure of a communication apparatus according to an embodiment of this application;
FIG. 9 is a diagram of another structure of a communication apparatus according to an embodiment of this application; and
FIG. 10 is a diagram of still another structure of a communication apparatus according to an embodiment of this application.

### DESCRIPTION OF EMBODIMENTS

The following clearly and completely describes technical solutions in embodiments of this application with reference to the accompanying drawings in embodiments of this application.

In descriptions of this application, terms such as "first" and "second" are merely used to distinguish between different objects, and do not limit quantities and execution sequences. In addition, the terms such as "first" and "second" do not indicate a definite difference. For example, first information, second information, a first PDC type, a second PDC type, and the like are merely used to distinguish between different information, and the first information, the second information, the first PDC type, and the second PDC type are not subject to a specific sequence. In addition, terms "include", "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In descriptions of this application, "/" means "or" unless otherwise specified. For example, A/B may indicate A or B. "And/or" in this specification describes only an association relationship between associated objects and indicates that three relationships may exist. For example, A and/or B may indicate the following three cases: Only A exists, both A and B exist, and only B exists. In addition, "at least one (item)", "one or more of the following items (pieces)", or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In the descriptions of this application, terms such as "example" or "for example" indicate giving an example, an illustration, or a description. Any embodiment or design scheme described as "example", "in an example", or "for example" in this application should not be explained as being more preferred or having more advantages than another embodiment or design scheme. Exactly, use of terms such as "example", "in an example", or "for example" is intended to present a related concept in a specific manner.

It may be understood that, in descriptions of this application, both "when" and "if" mean that an apparatus performs corresponding processing in an objective situation, are not intended to limit time, do not require the apparatus to necessarily have a determining action during implementation, and do not mean another limitation. The apparatus performing the corresponding processing in the objective situation includes: The corresponding processing can be performed when the objective situation is met; or the corresponding processing can be performed only when the objective situation and other situations are met.

"Simultaneously" in this application may be understood as being at a same time point, may be understood as being in a time period, or may be understood as being in a same period, and may be specifically understood with reference to context.

In this application, unless otherwise specified, an element indicated in a singular form is intended to indicate "one or more", but does not indicate "one and only one".

In addition, terms "system" and "network" may be used interchangeably in this specification.

It may be understood that, in embodiments of this application, "A corresponds to B", "A corresponds to B", "B corresponding to A", or a similar expression thereof indicates that B is associated with A, and B may be determined based on A. Determining B based on A does not mean that B is determined based only on A. B may alternatively be determined based on A and/or other information.

For ease of understanding the technical solutions in embodiments of this application, the following first briefly describes technologies and terms related to this application.

### 1. Hybrid beamforming (Hybrid Beamforming, HBF)

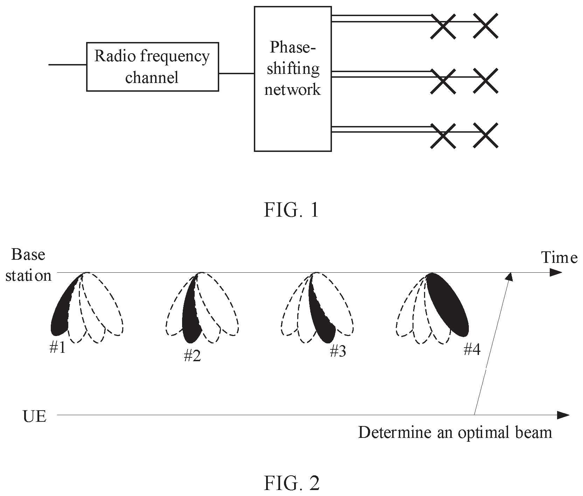

FIG. 1 is a diagram of an HBF method according to an embodiment of this application. As shown in FIG. 1, in the HBF method, one radio frequency channel may drive a plurality of antenna elements through a phase-shifting network. The phase-shifting network includes a plurality of analog phase shifters (a phase shifter for short), and a phase of a signal of each transmit antenna element is changed by using the phase shifter. In comparison with a digital beamforming (Digital Beamforming, DBF) method, the HBF can maintain comparable spectral efficiency and drive a large quantity of antenna elements through a small quantity of radio frequency channels, thereby reducing a quantity of radio frequency channels required by a MIMO system, reducing hardware costs, and improving cost-effectiveness of the MIMO system.

When link transmission is performed by using the HBF, to obtain optimal transmission performance, a beam sweeping measurement is usually required to search for and obtain an optimal transmit beam. The transmit beam refers to an analog beam in the HBF. Usually, a base station may perform beam sweeping by sending reference signals using different analog beams, and user equipment (User Equipment, UE) selects an optimal beam based on a measurement result and indicates the optimal beam to the base station. Specifically, the base station may perform transmit beam measurement in a polling manner. For example, a base station configures M reference signal resources corresponding to M analog beams. In other words, each reference signal is sent using a different analog beam. M is an integer greater than 1. In addition, the base station notifies UE that there are M reference signals corresponding to transmit beam measurement in different directions. The UE receives and measures, by using a same receive beam, reference signals corresponding to all the M reference signal resources, and the UE measures and compares quality of the M beams, selects a most suitable transmit beam, and reports the most suitable transmit beam to the base station.

FIG. 2 is a diagram of beam measurement according to an embodiment of this application. FIG. 2 shows an example in which a base station sends four analog beams to UE. The analog beam is indicated by a gray ellipse. Further, after receiving the four analog beams, the UE performs beam measurement, determines an optimal beam, and sends indication information indicating the optimal beam to the base station. It can be learned that, if the foregoing full-space analog beam polling is employed for analog beam measurement, when a larger quantity of analog beams needs to be measured, reference signal resources required for beam measurement are larger, resulting in high measurement overhead.

In this application, the analog beam in the HBF may also be referred to as a beam for short.

### 2. Three-dimensional antenna array

The three-dimensional antenna array arranges antenna elements both in-plane and out-of-plane. The three-dimensional antenna array includes K layers of antenna elements that are arranged in a first direction. A plane on which each layer of antenna elements in the K layers of antenna elements is located is a different plane. A quantity of antenna elements of at least one layer of antenna elements in the K layers of antenna elements is greater than 2, and K is an integer greater than 1. The first direction may also be referred to as a depth direction. It should be understood that the three-dimensional antenna array may also be referred to as a 3D array, a 3D antenna array, or the like. A name of the three-dimensional antenna array is not limited in this application.

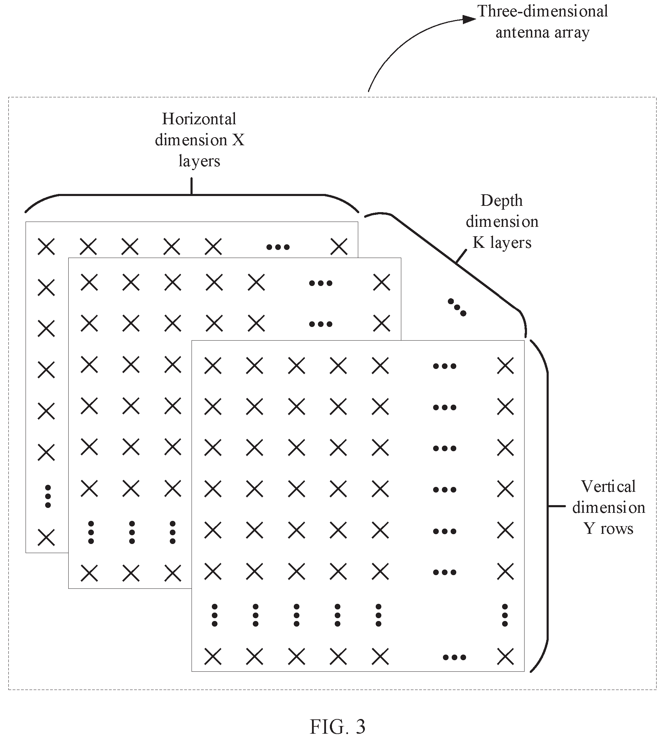

The following describes the three-dimensional antenna array by using FIG. 3 as an example.

As shown in FIG. 3, a three-dimensional antenna array includes K layers of antenna elements that are arranged in a first direction. Each layer of antenna elements includes Y rows and X columns of antenna elements. Y and X are integers not less than 2, and K is an integer greater than 1. A quantity of antenna elements of different layers in the K layers of antenna elements may be the same or different. A type of the antenna element of the three-dimensional antenna array is not limited in this application. In FIG. 3, the antenna element is indicated by × only for ease of description.

In this application, the first direction may be referred to as a depth dimension, an arrangement direction of the Y rows may be referred to as a vertical dimension, and an arrangement direction of the X columns may be referred to as a horizontal dimension. As shown in FIG. 3, in the three-dimensional antenna array, the X columns of antenna elements are arranged in the horizontal dimension, the Y rows of antenna elements are arranged in the horizontal dimension, and the K layers of antenna elements are arranged in the depth dimension, forming a three-dimensional array with X*Y*K antenna elements.

It should be understood that FIG. 3 shows only an example of a specific form of the 3D array, and does not constitute a limitation on the 3D array in this application.

In comparison with a two-dimensional antenna array, the three-dimensional antenna array can deploy more antenna elements in a same antenna array area. Current beam measurement methods (for example, the foregoing full-space analog beam polling) are all applied to planar two-dimensional antenna arrays. If the current beam measurement method is employed for beam measurement of the three-dimensional antenna array, reference signal resources required for beam measurement are larger, resulting in high measurement overhead.

In view of this, this application provides a beam measurement method for a three-dimensional antenna array. In the method, measurement can be performed twice, and a second round of measurement is performed based on first indication information determined from a first round of measurement. This can reduce reference signal resources for beam measurement and lower measurement overhead.

The inventor of this application finds that beams with a correlation relationship can be generated by using the three-dimensional antenna array, and a quantity of measured beams and reference signal resource overhead can be reduced by using the correlation relationship of the beams. It should be noted that there is no correlation relationship between beams of the current two-dimensional antenna array, and measurement of such beams is performed on each beam independently. In this case, a quantity of measured beams is large, and reference signal resource overhead is high.

In this application, an HBF technology can be employed for the three-dimensional antenna array. In other words, in an HBF method, one radio frequency channel may drive a plurality of antenna elements of the three-dimensional antenna array through a phase-shifting network. The phase-shifting network includes a depth-dimension phase shifter (a first phase shifter for short) and a horizontal and/or vertical-dimension phase shifter (a second phase shifter for short). The first phase shifter is connected to some or all of antenna elements in at least two layers of the three-dimensional antenna array, and the second phase shifter is connected to some or all of antenna elements in a same layer of the three-dimensional antenna array. A value of the first phase shifter affects a shape of a channel-level radiation pattern, and a value of the second phase shifter affects a direction of the channel-level radiation pattern.

In this application, the first phase shifter can further adjust a beam shape of a beam, and the second phase shifter can adjust a beam direction of the beam. The beam shape and the beam direction serve as characteristics of two dimensions of the beam. Because beam measurement is performed in two rounds, a dimensional characteristic (for example, a first characteristic) of the beam may be measured in a first round, and another dimensional characteristic (for example, a second characteristic) of the beam may be measured in a second round of beam measurement. In this case, the first indication information may indicate a characteristic result of a dimension of the beam measured in the first round. Using the first indication information to select beams for the second round of beam measurement can reduce a quantity of beams for beam measurement thereby lowering overhead of reference signal resources for beam measurement.

To better understand the beam measurement method for the three-dimensional antenna array and a related apparatus provided in this application, the following first describes a network architecture to which embodiments of this application are applied.

The technical solutions in embodiments of this application may be applied to various communication systems. The communication system includes at least one communication apparatus including a three-dimensional antenna array.

For example, the communication system may be a global system for mobile communication (global system for mobile communication, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, or a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a fifth generation mobile communication (the 5th generation, 5G) system, a new radio (new radio, NR) system, a machine-to-machine (machine-to-machine, M2M) communication system, or another future evolved communication system. This is not limited in embodiments of this application. The technical solutions provided in embodiments of this application may be further applied to another communication system. There is an entity in the communication system that can send control information and send (and/or receive) a transport block, and there is another entity in the communication system that can receive the control information and receive (and/or send) the transport block.

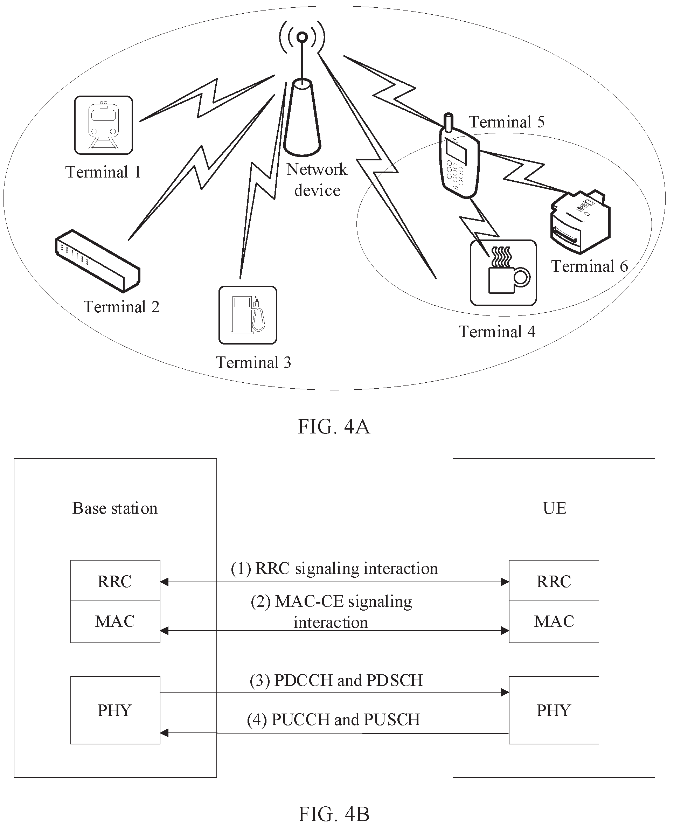

FIG. 4A is a diagram of a network architecture of a communication system according to an embodiment of this application.

As shown in FIG. 4A, a network device and a terminal device 1 to a terminal device 6 form the communication system. The network device includes a three-dimensional antenna array.

In the communication system, the network device sends downlink data to one or more terminal devices in the terminal device 1 to the terminal device 6, and the terminal device 1 to the terminal device 6 may also send uplink data to the network device. In addition, aggregated transmission may be performed between terminal devices, for example, the terminal device 4 to the terminal device 6 shown in FIG. 4A. At least one of the network device and the terminal device in FIG. 4A includes an antenna system provided in this application.

In embodiments of this application, the terminal device is a user-side entity configured to receive or transmit a signal, for example, user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of wearable devices, for example, glasses, gloves, watches, clothing, and shoes, that are developed by applying wearable technologies to intelligent designs for daily wear. The wearable device is a portable device that is directly worn on a body or integrated into clothes or an accessory of a user. The wearable device is not merely a hardware device, but further implements a powerful function through software support, data exchange, and cloud-based interaction. In a broad sense, wearable intelligent devices include full-featured and large-sized devices that can implement all or some of functions without depending on smartphones, for example, smart watches or smart glasses, and include devices that focus only on a specific type of application function and need to be used together with other devices such as smartphones, for example, various smart bands and smart jewelry for monitoring physical signs.

In addition, in embodiments of this application, the terminal device may alternatively be a terminal in an Internet of things (internet of things, IoT) system. The IoT is an important part in future development of information technology. A main technical feature of the IoT is to connect things to a network by using a communication technology, to implement an intelligent network for human-machine interconnection and thing-thing interconnection. In embodiments of this application, an IoT technology can implement massive connections, deep coverage, and terminal power saving by using, for example, a narrowband (narrowband, NB) technology.

In addition, in embodiments of this application, the terminal device may further include a sensor such as an intelligent printer, a train detector, and a gas station. Main functions of the terminal device include collecting data (some terminal devices), receiving control information and downlink data of the network device, sending an electromagnetic wave, and transmitting uplink data to the network device.

In embodiments of this application, the network device is an entity configured to transmit or receive a signal, or may be a device configured to communicate with the terminal device. The network device may be a base station (base transceiver station, BTS) in a global system for mobile communication (global system for mobile communication, GSM) system or a code division multiple access (code division multiple access, CDMA) system, may be a base station (NodeB, NB) in a wideband code division multiple access (wideband code division multiple access, WCDMA) system, may be an evolved NodeB (evolved NodeB, eNB or eNodeB) in an LTE system, or may be a wireless controller in a scenario of a cloud radio access network (cloud radio access network, CRAN). Alternatively, the network device may be a relay station, an access point, a vehicle-mounted device, a wearable device, a network device in a 5G network, a network device in a future evolved PLMN network, or the like. This is not limited in embodiments of this application.

In embodiments of this application, the network device may be a device in a wireless network, for example, a radio access network (radio access network, RAN) node that connects the terminal device to the wireless network. Currently, examples of some RAN nodes are a base station, a next-generation NodeB gNB, a transmission reception point (transmission reception point, TRP), an evolved NodeB (evolved NodeB, eNB), a home base station, a baseband unit (baseband unit, BBU), or an access point (access point, AP) in a Wi-Fi system. In a network structure, the network device may include a central unit (centralized unit, CU) node, a distributed unit (distributed unit, DU) node, or a RAN device including a CU node and a DU node.

FIG. 4B is a diagram of a network architecture of another communication system according to an embodiment of this application. The communication system includes a base station and user equipment (User Equipment, UE). The base station includes a three-dimensional antenna array.

Both the base station and the UE may include a radio resource control (Radio Resource Control, RRC) signaling interaction module, a media access control (Media Access Control, MAC) signaling interaction module, and a physical layer (Physical Layer, PHY) signaling and data interaction module. The RRC signaling interaction module is a module configured by the base station and the UE to send and receive RRC signaling. The MAC signaling interaction module is a module configured by the base station and the UE to send and receive media access control control element (Media Access Control-Control Element, MAC-CE) signaling. The PHY signaling and data interaction module is a module configured by the base station and the UE to send and receive uplink/downlink control signaling and uplink/downlink data, and may be specifically configured to send and receive the downlink control signaling via a physical downlink control channel (Physical Downlink Control Channel, PDCCH), send and receive the uplink control signaling via a physical uplink control channel (Physical Uplink Control Channel, PUCCH), send and receive the downlink data via a physical downlink shared channel (Physical Downlink Shared Channel, PDSCH), and send and receive the uplink data via a physical uplink shared channel (Physical Uplink Shared Channel, PUSCH).

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

It should be noted that a quantity and types of terminal devices included in the network architecture shown in FIG. 4A are merely examples. Embodiments of this application are not limited thereto. For example, more or fewer terminal devices that communicate with the network device may be further included. For brevity, details are not described in the accompanying drawings. In addition, in the network architecture shown in FIG. 4A, although the network device and the terminal device are shown, an application scenario may not be limited to including the network device and the terminal device. For example, the application scenario may further include a core network node or a device configured to carry a virtualized network function. This is clear to a person skilled in the art, and details are not described herein.

With reference to the foregoing network architecture, the following describes a beam measurement method for a three-dimensional antenna array according to an embodiment of this application.

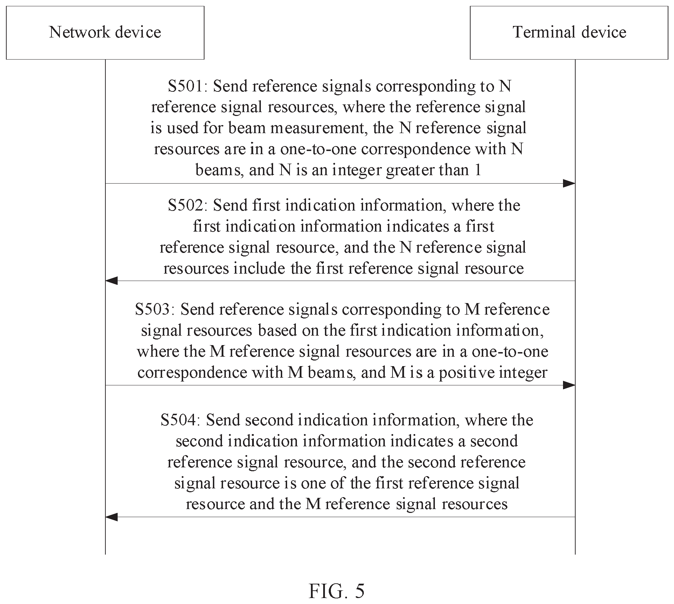

FIG. 5 is a schematic flowchart of a beam measurement method for a three-dimensional antenna array according to an embodiment of this application. In this embodiment of this application, a function performed by a terminal device may alternatively be performed by a module (for example, a chip) in the terminal device, and a function performed by a network device in this application may alternatively be performed by a module (for example, a chip) in the network device.

As shown in FIG. 5, the beam measurement method for the three-dimensional antenna array may include the following steps.

Step S501: The network device sends reference signals corresponding to N reference signal resources to the terminal device, where the reference signals are used for beam measurement, the N reference signal resources are in a one-to-one correspondence with N beams, and N is an integer greater than 1.

Correspondingly, the terminal device receives the reference signals corresponding to the N reference signal resources from the network device.

In an implementation, the N beams have a same first characteristic but a different second characteristic. For example, the first characteristic is beam direction, and the second characteristic is beam shape. For another example, the first characteristic is beam shape, and the second characteristic is beam direction.

For example, the reference signal may be any one of a channel state information reference signal (channel state information reference signal, CSI-RS) or a synchronization signal and physical broadcast channel block (synchronization signal and physical broadcast channel block, SSB).

Step S502: The terminal device sends first indication information to the network device, where the first indication information indicates a first reference signal resource, and the N reference signal resources include the first reference signal resource.

Correspondingly, the network device receives the first indication information from the terminal device.

Optionally, the first reference signal resource may be determined based on signal quality of the reference signals corresponding to the N reference signal resources. For example, the terminal device receives the reference signals corresponding to the N reference signal resources, and determines a reference signal resource of a reference signal with best signal quality in N reference signals as the first reference signal resource. For example, the terminal device may determine, based on the received reference signal, a metric that is used to measure signal quality and that corresponds to the reference signal, for example, reference signal received power (Reference signal received power, RSRP) or a signal-to-noise ratio (Signal-to-noise ratio, SNR), and select a reference signal resource corresponding to a reference signal with highest RSRP or highest SNR in the N reference signals as the first reference signal resource. A method used by the terminal device to perform beam measurement and determine the first reference signal resource is not limited in this embodiment of this application.

For example, the first indication information may be a resource number of the first reference signal resource.

Step S503: The network device sends reference signals corresponding to M reference signal resources based on the first indication information, where the M reference signal resources are in a one-to-one correspondence with M beams, and M is a positive integer.

Correspondingly, the terminal device receives the reference signals corresponding to the M reference signal resources from the network device.

The N reference signal resources and the M reference signal resources are different reference signal resources.

In an implementation, the N beams have a same first characteristic but a different second characteristic, and the M beams have a different first characteristic but a same second characteristic. For example, the first characteristic is beam direction, and the second characteristic is beam shape. For another example, the first characteristic is beam shape, and the second characteristic is beam direction.

For example, the network device may send reference signals through a phase-shifting network and the three-dimensional antenna array. The phase-shifting network includes a depth-dimension phase shifter (a first phase shifter for short) and a horizontal and/or vertical-dimension phase shifter (a second phase shifter for short). The first phase shifter is connected to some or all of antenna elements in at least two layers of the three-dimensional antenna array, and the second phase shifter is connected to some or all of antenna elements in a same layer of the three-dimensional antenna array. In this case, the network device may adjust a beam shape of an analog beam by using the first phase shifter, and adjust a beam direction of the analog beam by using the second phase shifter. For example, the network device adjusts beam shapes of the N beams to a first beam shape by using the first phase shifter, and adjusts beam directions of the N beams to N different beam directions by using the second phase shifter. The network device adjusts beam directions of the M beams to a first beam direction by using the second phase shifter, and adjusts beam shapes of the M beams to M different beam shapes by using the first phase shifter.

The first beam direction may be determined based on the first indication information. For example, if a beam corresponding to the first reference signal resource indicated by the first indication information is indicated as the first beam direction, the network device may determine the beam directions of the M beams based on the first beam direction.

Optionally, the second characteristic of the M beams is one of the second characteristics of the N beams.

Step S504: The terminal device sends second indication information to the network device, where the second indication information indicates a second reference signal resource, and the second reference signal resource is one of the first reference signal resource and the M reference signal resources.

Correspondingly, the network device receives the second indication information from the terminal device.

Optionally, the second reference signal resource may be determined based on signal quality of the reference signals corresponding to the M reference signal resources and signal quality of a reference signal corresponding to the first reference signal resource. For example, the reference signals corresponding to the M reference signal resources are used by the terminal device to perform beam measurement, and a reference signal resource of a reference signal with best signal quality in M reference signals and the first reference signal is determined as the second reference signal resource. A method used by the terminal device to perform beam measurement and determine the second reference signal resource is not limited in this embodiment of this application.

For example, the second indication information may be a resource number of the second reference signal resource.

In some embodiments, after obtaining the second indication information, the network device may use a beam corresponding to the second reference signal resource as an optimal analog beam for subsequent data transmission.

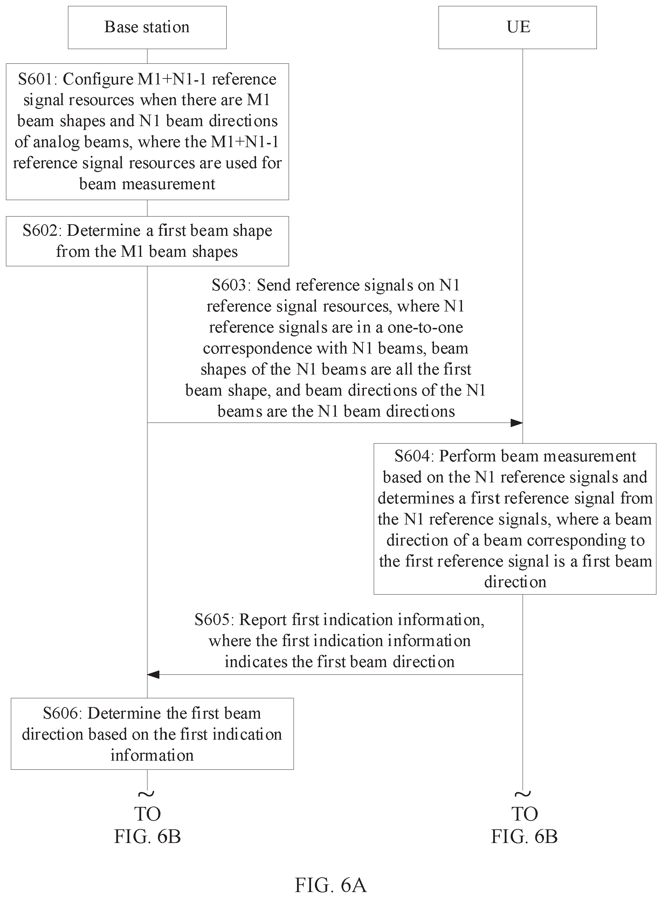

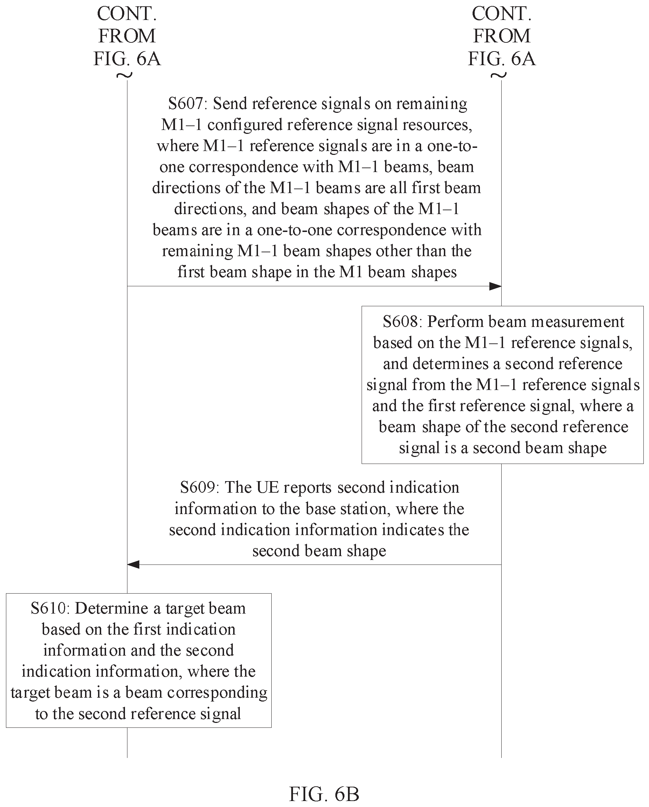

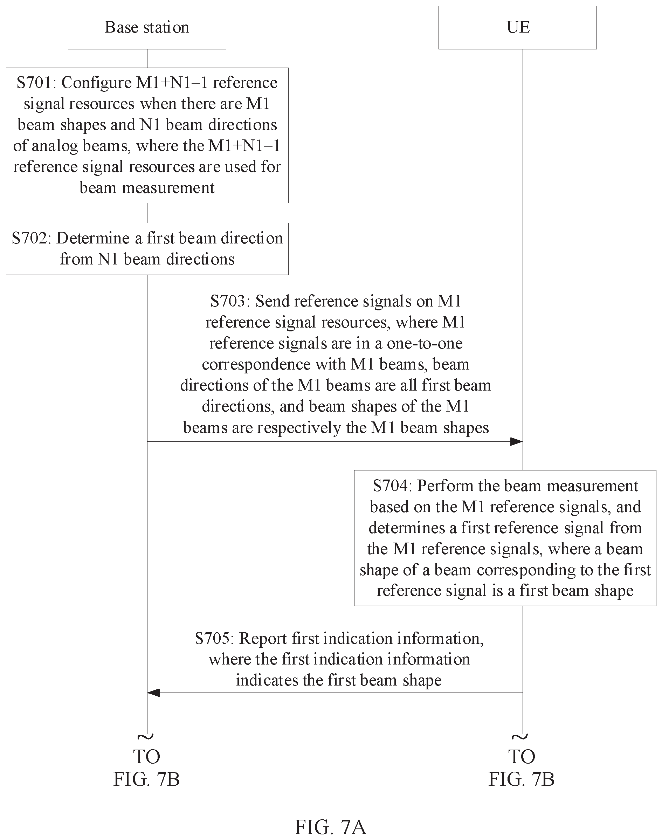

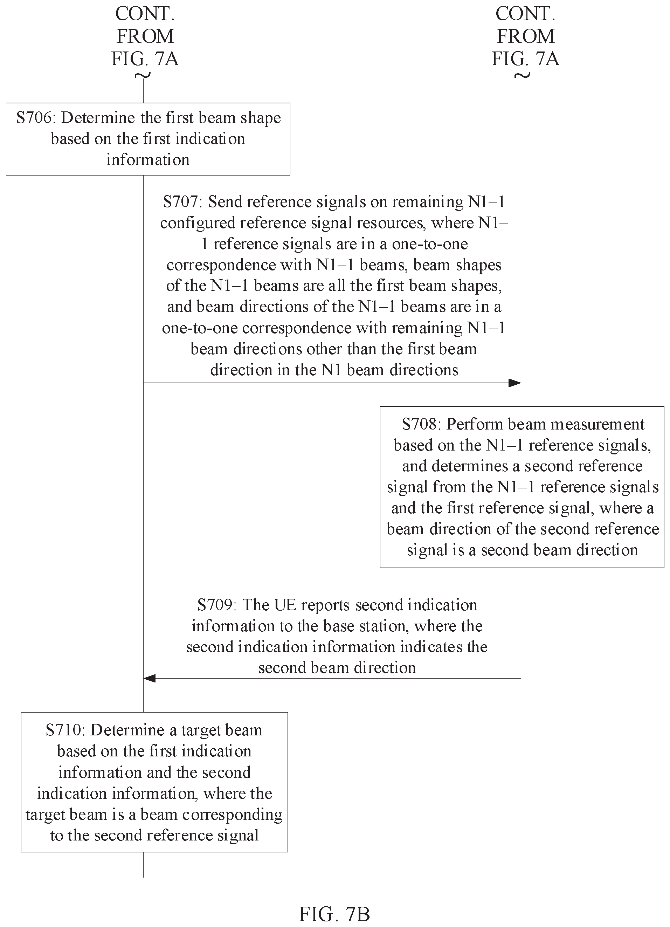

The method embodiment shown in FIG. 5 includes many possible implementation solutions. The following describes some of the implementation solutions by using examples with reference to FIG. 6A and FIG. 6B and FIG. 7A and FIG. 7B. It should be noted that, for related concepts, operations, or logical relationships that are not explained in FIG. 6A and FIG. 6B and FIG. 7A and FIG. 7B, refer to corresponding descriptions in the embodiment shown in FIG. 5.

FIG. 6A and FIG. 6B are a schematic flowchart of a beam measurement method for another three-dimensional antenna array according to an embodiment of this application.

In this embodiment of this application, an example in which a network device is a base station and a terminal device is UE is used to describe in detail the beam measurement method for the three-dimensional antenna array provided in this application. In this embodiment of this application, analog beam measurement is completed by first polling beam directions and then polling beam shapes. In this embodiment of this application, a function performed by the UE may alternatively be performed by a module (for example, a chip) in the UE, and a function performed by the base station in this application may alternatively be performed by a module (for example, a chip) in the base station.

In the embodiment shown in FIG. 6A and FIG. 6B, N1 reference signals may be the reference signals corresponding to the N reference signal resources in the embodiment shown in FIG. 5, M1-1 reference signals may be the reference signals corresponding to the M reference signal resources in the embodiment shown in FIG. 5, and M1+N1-1 reference signal resources are the N reference signal resources and the M reference signal resources in the embodiment shown in FIG. 5.

As shown in FIG. 6A and FIG. 6B, the beam measurement method for the three-dimensional antenna array may include some or all of the following steps.

S601: The base station configures the M1+N1-1 reference signal resources when there are M1 beam shapes and N1 beam directions of analog beams, where the M1+N1-1 reference signal resources are used for beam measurement.

Both M1 and N1 are integers greater than 1, and the M1+N1-1 reference signal resources are different reference signal resources. For example, the reference signal resource includes a time domain resource and a frequency domain resource.

Optionally, a process in which the base station configures a reference signal resource may include: sending configuration information of the reference signal resource to the terminal device, where the configuration information includes a resource number, reference signal periodicity information, time-domain resource mapping information, frequency-domain resource mapping information, and the like.

In an implementation, the base station may predefine a two-dimensional beam numbering manner. A beam numbered (m, n) is an analog beam determined based on an m^{th} beam shape and an n^{th} beam direction, where m is a beam shape index, n is a beam direction index, a value range of m is from 1 to M1, or from 0 to M1-1, and a value range of n is from 1 to N1, or from 0 to N1-1.

S602: The base station determines a first beam shape from the M1 beam shapes.

Optionally, the first beam shape may be randomly selected by the base station from the M1 beam shapes, or may be a beam shape with a largest beam width selected from the M1 beam shapes, to better select an optimal beam direction.

S603: The base station sends reference signals on N1 reference signal resources, where the N1 reference signals are in a one-to-one correspondence with N1 beams, beam shapes of the N1 beams are all the first beam shape, and beam directions of the N1 beams are the N1 beam directions.

In other words, the beam directions of the N1 beams are different, and the beam directions of the N1 beams are in a one-to-one correspondence with the N1 beam directions.

In an implementation, the base station may send reference signals through a phase-shifting network and the three-dimensional antenna array. The phase-shifting network includes a depth-dimension phase shifter (a first phase shifter for short) and a horizontal and/or vertical-dimension phase shifter (a second phase shifter for short). The first phase shifter is connected to some or all of antenna elements in at least two layers of the three-dimensional antenna array, and the second phase shifter is connected to some or all of antenna elements in a same layer of the three-dimensional antenna array. The first phase shifter is configured to adjust a beam shape of the analog beam, and the second phase shifter is configured to adjust a beam direction of the analog beam. In this case, the base station may first fix a value of the first phase shifter, that is, fix a beam shape, and then generate the N1 beams on the N1 reference signal resources by using N1 different values of the second phase shifter, to send the reference signals. The value of the first phase shifter is used to adjust a beam shape of a beam to the first beam shape, and the N1 values of the second phase shifter are respectively used to adjust beam directions of the beam to the N1 beam directions.

S604: The UE performs beam measurement based on the N1 reference signals and determines a first reference signal from the N1 reference signals, where a beam direction of a beam corresponding to the first reference signal is a first beam direction.

It should be understood that the first reference signal uniquely corresponds to one beam of the N1 beams and also uniquely corresponds to one reference signal resource of the N1 reference signal resources. Therefore, determining the first reference signal from the N1 reference signals is determining the beam corresponding to the first reference signal from the N1 beams, the beam direction (namely, the first beam direction) corresponding to the first reference signal is determined from the N1 beam directions, and a first reference signal resource corresponding to the first reference signal is determined from the N1 reference signal resources.

S605: The UE reports first indication information to the base station, where the first indication information indicates the first beam direction.

Optionally, the first indication information may be a resource number of the first reference signal resource corresponding to the first reference signal. Although the first indication information directly indicates the first reference signal resource corresponding to the first reference signal, because the beam direction of the first reference signal is the first beam direction, the first beam direction is indicated. For example, the UE receives the N1 reference signals, determines the first reference signal from the N1 reference signals, and uses the resource number of the first reference signal resource corresponding to the first reference signal as the first indication information.

Optionally, the first indication information may be a beam direction index n* of the first beam direction. In other words, the first indication information directly indicates the first beam direction. For example, the N1 reference signals are used by the terminal device to perform beam measurement, and the terminal device may determine the first reference signal from the N1 reference signals and use the beam direction index n* of the beam corresponding to the first reference signal as the first indication information.

Optionally, the first indication information may be a number of the first reference signal. In other words, the first indication information directly indicates the first reference signal. Because the beam direction of the first reference signal is the first beam direction, the first beam direction is indicated.

It should be understood that the first indication information indicates the first beam direction. Because the first beam direction is the beam direction of the beam corresponding to the first reference signal, and the first reference signal corresponds to the first reference signal resource, it may also be considered that the first indication information indicates the first reference signal resource.

S606: The base station determines the first beam direction based on the first indication information.

In an implementation, the first indication information may be the resource number of the first reference signal resource corresponding to the first reference signal. In this case, the base station determines the first reference signal resource based on the resource number of the first reference signal resource, determines a beam corresponding to the first reference signal resource, and determines the beam direction of the beam as the first beam direction.

In another implementation, the first indication information may be the beam direction index n*. In this case, the base station may determine the first beam direction based on the beam direction index n*.

S607: The base station sends reference signals on remaining M1-1 configured reference signal resources, where the M1-1 reference signals are in a one-to-one correspondence with M1-1 beams, beam directions of the M1-1 beams are all first beam directions, and beam shapes of the M1-1 beams are in a one-to-one correspondence with remaining M1-1 beam shapes other than the first beam shape in the M1 beam shapes.

In an implementation, the base station may send the reference signals through the phase-shifting network and the three-dimensional antenna array. The phase-shifting network includes the first phase shifter and the second phase shifter. The first phase shifter is connected to some or all of antenna elements in at least two layers of the three-dimensional antenna array, and the second phase shifter is connected to some or all of antenna elements in the same layer of the three-dimensional antenna array. The first phase shifter is configured to adjust the beam shape of the analog beam, and the second phase shifter is configured to adjust the beam direction of the analog beam. In this case, the base station may first fix a value of the second phase shifter, that is, set a beam direction as the first beam direction. Then, the base station may generate M1-1 beams that have different beam shapes but a same beam direction on the M1-1 reference signal resources by using M1-1 different values of the first phase shifters, to send the reference signals. The value of the second phase shifter is used to adjust a beam direction of a beam to the first beam direction, and the M1-1 values of the first phase shifter are respectively used to adjust beam shapes of the beam to the M1-1 beam shapes.

S608: The UE performs beam measurement based on the M1-1 reference signals, and determines a second reference signal from the M1-1 reference signals and the first reference signal, where a beam shape of the second reference signal is a second beam shape.

S609: The UE reports second indication information to the base station, where the second indication information indicates the second beam shape.

Optionally, the second indication information may be a resource number of a second reference signal resource corresponding to the second reference signal. Because the second indication information directly indicates the second reference signal resource corresponding to the second reference signal, and the beam shape of the second reference signal is the second beam shape, the second beam shape is indicated.

Optionally, the second indication information may be a beam shape index m* of the second beam shape. In other words, the second indication information directly indicates the second beam shape.

Optionally, the second indication information may be a number of the second reference signal. In other words, the second indication information directly indicates the second reference signal. Because the beam shape of the second reference signal is the second beam shape, the second beam shape is indicated.

It should be understood that the second indication information indicates the second beam shape. Because the second beam shape is a beam shape of a beam corresponding to the second reference signal, and the second reference signal corresponds to the second reference signal resource, it may also be considered that the second indication information indicates the second reference signal resource.

S610: The base station determines a target beam based on the first indication information and the second indication information, where the target beam is the beam corresponding to the second reference signal.

In an implementation, the base station may uniquely determine an optimal analog beam, that is, an analog beam numbered (m*, n*), based on the beam shape index m* and the beam direction index n* that are fed back by the UE.

In some other embodiments of this application, step S601 may be: The base station configures M1+N1 reference signal resources when there are M1 beam shapes and N1 beam directions of analog beams, where the M1+N1 reference signal resources are used for beam measurement. Step S607 may be: The base station sends reference signals on remaining M1 configured reference signal resources, where M1 reference signals are in a one-to-one correspondence with M1 beams, beam directions of the M1 beams are all first beam directions, and beam shapes of the M1 beams are in a one-to-one correspondence with the M1 beam shapes. Step S608 may be: The UE performs beam measurement based on the M1 reference signals, and determines a second reference signal from the M1 reference signals, where a beam shape of the second reference signal is a second beam shape. In comparison with the embodiment shown in FIG. 6A and FIG. 6B, one additional reference signal resource is configured in this embodiment. However, in this method, the network device does not need to exclude a beam shape (namely, the first beam shape) of a measured beam from the M1 beam shapes, and the terminal device does not need to retain a result of a previous measurement. This can reduce processing procedures of the network device and the terminal device and improve a processing speed.

FIG. 7A and FIG. 7B are a schematic flowchart of a beam measurement method for still another three-dimensional antenna array according to an embodiment of this application.

In this embodiment of this application, an example in which a network device is a base station and a terminal device is UE is used to describe in detail the beam measurement method for the three-dimensional antenna array provided in this application. In this embodiment of this application, analog beam measurement is completed by first polling beam shapes and then polling beam directions. In this embodiment of this application, a function performed by the UE may alternatively be performed by a module (for example, a chip) in the UE, and a function performed by the base station in this application may alternatively be performed by a module (for example, a chip) in the base station.

In the embodiment shown in FIG. 7A and FIG. 7B, N1 reference signals may be the reference signals corresponding to the N reference signal resources in the embodiment shown in FIG. 5, M1-1 reference signals may be the reference signals corresponding to the M reference signal resources in the embodiment shown in FIG. 5, and M1+N1-1 reference signal resources are the N reference signal resources and the M reference signal resources in the embodiment shown in FIG. 5.

As shown in FIG. 7A and FIG. 7B, the beam measurement method for the three-dimensional antenna array may include some or all of the following steps.

S701: The base station configures the M1+N1-1 reference signal resources when there are M1 beam shapes and N1 beam directions of analog beams, where the M1+N1-1 reference signal resources are used for beam measurement.

Both M1 and N1 are integers greater than 1, and the M1+N1-1 reference signal resources are different reference signal resources. For example, the reference signal resource includes a time domain resource and a frequency domain resource.

Optionally, a process in which the base station configures a reference signal resource may include: sending configuration information of the reference signal resource to the terminal device, where the configuration information includes a resource number, reference signal periodicity information, time-domain resource mapping information, frequency-domain resource mapping information, and the like.

In an implementation, the base station may predefine a two-dimensional beam numbering manner. A beam numbered (m, n) is an analog beam determined based on an m^{th} beam shape and an n^{th} beam direction, where m is a beam shape index, n is a beam direction index, a value range of m is from 1 to M1, or from 0 to M1-1, and a value range of n is from 1 to N1, or from 0 to N1-1.

S702: The base station determines a first beam direction from the N1 beam directions.

A method for determining the first beam direction is not limited in this application.

S703: The base station sends reference signals on M1 reference signal resources, where M1 reference signals are in a one-to-one correspondence with M1 beams, beam directions of the M1 beams are all first beam directions, and beam shapes of the M1 beams are respectively the M1 beam shapes.

In other words, the beam shapes of the M1 beams are different, and the beam shapes of the M1 beams are in a one-to-one correspondence with the M1 beam shapes.

In an implementation, the base station may send reference signals through a phase-shifting network and the three-dimensional antenna array. The phase-shifting network includes a depth-dimension phase shifter (a first phase shifter for short) and a horizontal and/or vertical-dimension phase shifter (a second phase shifter for short). The first phase shifter is connected to some or all of antenna elements in at least two layers of the three-dimensional antenna array, and the second phase shifter is connected to some or all of antenna elements in a same layer of the three-dimensional antenna array. The first phase shifter is configured to adjust a beam shape of the analog beam, and the second phase shifter is configured to adjust a beam direction of the analog beam. In this case, the base station may first fix a value of the second phase shifter, that is, fix a beam direction, and then generate the M1 beams on the M1 reference signal resources by using M1 different values of the second phase shifter, to send the reference signals. The value of the second phase shifter is used to adjust a beam direction of a beam to the first beam direction, and M1 values of the first phase shifter are respectively used to adjust beam shapes of the beam to the M1 beam shapes.

S704: The UE performs beam measurement based on the M1 reference signals, and determines a first reference signal from the M1 reference signals, where a beam shape of a beam corresponding to the first reference signal is a first beam shape.

It should be understood that determining the first reference signal from the M1 reference signals is determining the beam corresponding to the first reference signal from the M1 beams. In other words, the beam shape, namely, the first beam shape, corresponding to the first reference signal, is determined from the M1 beam shapes.

S705: The UE reports first indication information to the base station, where the first indication information indicates the first beam shape.

Optionally, the first indication information may be a resource number of a first reference signal resource corresponding to the first reference signal. Because the first indication information directly indicates the first reference signal resource corresponding to the first reference signal, and the beam shape of the first reference signal is the first beam shape, the first beam shape is indicated. For example, the UE performs beam measurement based on the N1 reference signals, determines the first reference signal from the N1 reference signals, and uses the resource number of the first reference signal resource corresponding to the first reference signal as the first indication information.

Optionally, the first indication information may be a beam shape index m* of the first beam shape. In other words, the first indication information directly indicates the first beam shape. For example, the UE performs beam measurement based on the N1 reference signals, determines the first reference signal from the N1 reference signals, and uses a beam shape index m* of the beam corresponding to the first reference signal as the first indication information.

Optionally, the first indication information may be a number of the first reference signal. In other words, the first indication information directly indicates the first reference signal. Because the beam shape of the first reference signal is the first beam shape, the first beam shape is indicated.

It should be understood that the first indication information indicates the first beam shape. Because the first beam shape is the beam shape of the beam of the first reference signal, and the first reference signal corresponds to the first reference signal resource, it may also be considered that the first indication information indicates the first reference signal resource.

S706: The base station determines the first beam shape based on the first indication information.

In an implementation, the first indication information may be the resource number of the first reference signal resource corresponding to the first reference signal. In this case, the base station determines the first reference signal resource based on the resource number of the first reference signal resource, determines a beam corresponding to the first reference signal resource, and determines the beam shape of the beam as the first beam shape.

In another implementation, the first indication information may be the beam shape index m*. In this case, the base station determines the first beam shape based on the beam shape index m*.

S707: The base station sends reference signals on remaining N1-1 configured reference signal resources, where N1-1 reference signals are in a one-to-one correspondence with N1-1 beams, beam shapes of the N1-1 beams are all the first beam shapes, and beam directions of the N1-1 beams are in a one-to-one correspondence with remaining N1-1 beam directions other than the first beam direction in the N1 beam directions.

In an implementation, the base station may send the reference signals through the phase-shifting network and the three-dimensional antenna array. The phase-shifting network includes the first phase shifter and the second phase shifter. The first phase shifter is connected to some or all of antenna elements in at least two layers of the three-dimensional antenna array, and the second phase shifter is connected to some or all of antenna elements in the same layer of the three-dimensional antenna array. The first phase shifter is configured to adjust the beam shape of the analog beam, and the second phase shifter is configured to adjust the beam direction of the analog beam. In this case, the base station may first fix a value of the first phase shifter, that is, fix a beam shape as the first beam shape, and then generate the N1-1 beams with different beam directions on the N1-1 reference signal resources by using N1-1 different values of the second phase shifter, to send the reference signals. The value of the first phase shifter is used to adjust a beam shape of a beam to the first beam shape, and N1-1 values of the first phase shifter are respectively used to adjust a beam direction of the beam to N1-1 beam shapes.

S708: The UE performs beam measurement based on the N1-1 reference signals, and determines a second reference signal from the N1-1 reference signals and the first reference signal, where a beam direction of the second reference signal is a second beam direction.

S709: The UE reports second indication information to the base station, where the second indication information indicates the second beam direction.

Optionally, the second indication information may be a resource number of a second reference signal resource corresponding to the second reference signal. Because the second indication information directly indicates the second reference signal resource corresponding to the second reference signal, and the beam direction of the second reference signal is the second beam direction, the second beam direction is indicated.

Optionally, the second indication information may be a beam direction index n* of the second beam direction. In other words, the second indication information directly indicates the second beam direction.

Optionally, the second indication information may be a number of the second reference signal. In other words, the second indication information directly indicates the second reference signal. Because the beam direction of the second reference signal is the second beam direction, the second beam direction is indicated.

It should be understood that the second indication information indicates the second beam direction. Because the second beam direction is a beam direction of a beam corresponding to the second reference signal, and the second reference signal corresponds to the second reference signal resource, it may also be considered that the second indication information indicates the second reference signal resource.

S710: The base station determines a target beam based on the first indication information and the second indication information, where the target beam is the beam corresponding to the second reference signal.

In an implementation, the base station may uniquely determine an optimal analog beam, that is, an analog beam numbered (m*, n*), based on the beam shape index m* and the beam direction index n* that are fed back by the UE.

In some other embodiments of this application, step S701 may be: The base station configures M1+N1 reference signal resources when there are M1 beam shapes and N1 beam directions of analog beams, where the M1+N1 reference signal resources are used for beam measurement. Step S707 may be: The base station sends reference signals on remaining N1 configured reference signal resources, where the N1 reference signals are in a one-to-one correspondence with N1 beams, beam shapes of the N1 beams are all first beam shapes, and beam directions of the N1 beams are in a one-to-one correspondence with the N1 beam directions. Step S708 may be: The UE performs beam measurement based on the N1 reference signals, and determines a second reference signal from the N1 reference signals, where a beam direction of the second reference signal is a second beam direction. In comparison with the embodiment shown in FIG. 7A and FIG. 7B, one additional reference signal resource is configured in this embodiment. However, in this method, the network device does not need to exclude a beam direction (namely, the first beam direction) of a measured beam from the M1 beam directions, and the terminal device does not need to retain a result of a previous measurement. This can reduce processing procedures of the network device and the terminal device and improve a processing speed.

It may be understood that, in this embodiment, beams designed by the base station are divided into several beam groups (it is assumed that there are M1 groups, and M1 is an integer greater than 1) in a beam generation manner, each beam group includes N1 beams (N1 is an integer greater than 1), N1 beams in each beam group have a same value of the first phase shifter, different beam groups correspond to different values of the first phase shifter, and different beam groups are generated by using a same value of the second phase shifter. It may be understood that total M1*N1 beams may be uniquely determined by two dimensions: a depth dimension and a vertical-horizontal dimension (the vertical and the horizontal are considered as a dimension herein), and the M1*N1 beams correspond to a specific value of the first phase shifter and a specific value of the second phase shifter. In this embodiment of this application, a first dimension may be first fixed to determine an optimal beam direction in the other dimension, then the optimal beam direction in the dimension is fixed to determine an optimal radiation pattern shape in the first dimension, and an optimal beam is determined. In this case, beam measurement and selection can be completed. In this method, in comparison with independently measuring the M1*N1 beams, only M1+N1 beams need to be measured. This reduces a quantity of measured beams and lowers reference signal resource overhead.

The foregoing content describes in detail the method provided in this application. To facilitate implementation of the foregoing solutions in embodiments of this application, embodiments of this application further provide a corresponding apparatus or device.

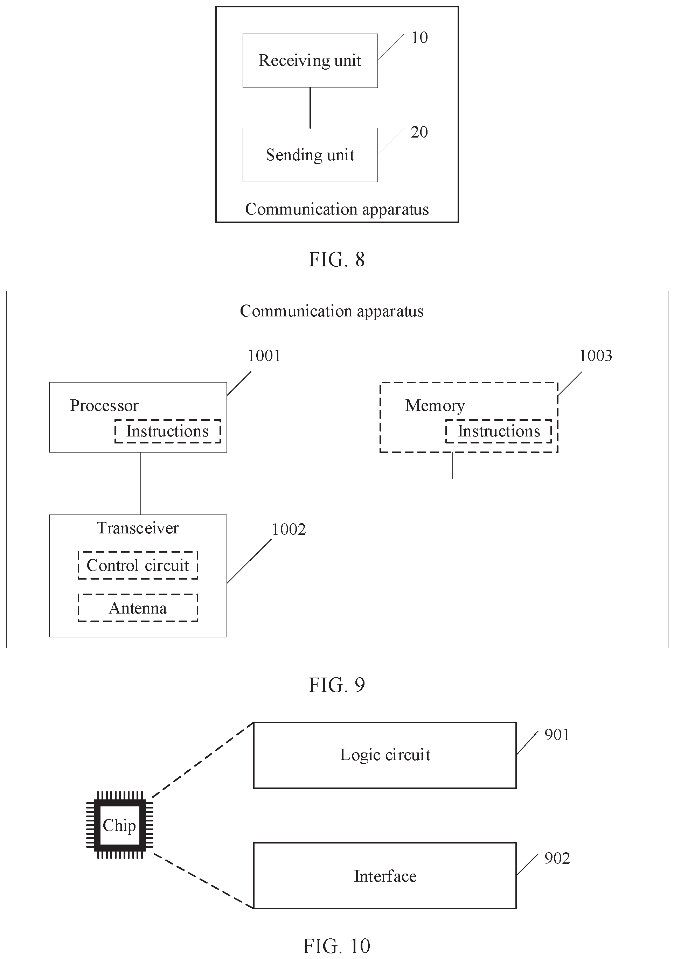

In this application, a network device or a terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail a communication apparatus in embodiments of this application with reference to FIG. 8 to FIG. 10.

FIG. 8 is a diagram of a structure of a communication apparatus according to an embodiment of this application. As shown in FIG. 8, the communication apparatus may include a receiving unit 10 and a sending unit 20.

In some embodiments of this application, the communication apparatus may be the network device shown above, or a chip or a circuit disposed in the network device. In other words, the communication apparatus may be configured to perform steps, functions, or the like performed by the network device in the foregoing method embodiments.

In a design, the sending unit 20 is configured to send reference signals corresponding to N reference signal resources, where the reference signals are used for beam measurement, the N reference signal resources are in a one-to-one correspondence with N beams, and N is an integer greater than 1. The receiving unit 10 is configured to receive first indication information, where the first indication information indicates a first reference signal resource, and the N reference signal resources include the first reference signal resource. The sending unit 20 is configured to send reference signals corresponding to M reference signal resources based on the first indication information, where the M reference signal resources are in a one-to-one correspondence with M beams, and M is a positive integer. The receiving unit 10 is configured to receive second indication information, where the second indication information indicates a second reference signal resource, and the second reference signal resource is one of the first reference signal resource and the M reference signal resources.

In a possible implementation, the N reference signal resources and the M reference signal resources are different reference signal resources.

In a possible implementation, the N beams have a same first characteristic but a different second characteristic, and the M beams have a different first characteristic but a same second characteristic.

For example, the first characteristic is beam direction, and the second characteristic is beam shape.

For example, the first characteristic is beam shape, and the second characteristic is beam direction.

For example, the first reference signal resource is determined based on signal quality of the reference signals corresponding to the N reference signal resources.

For example, the second reference signal resource is determined based on signal quality of the reference signals corresponding to the M reference signal resources and signal quality of a reference signal corresponding to the first reference signal resource.

For example, the reference signal is either a channel state information reference signal CSI-RS or a synchronization signal and physical broadcast channel block SSB.

For example, the first indication information is a resource number of the first reference signal resource, and the second indication information is a resource number of the second reference signal resource.

In this embodiment of this application, for descriptions of the first indication information, the second indication information, and the like, refer to the descriptions in the method embodiments shown in FIG. 5 to FIG. 7A and FIG. 7B. Details are not described herein again.

It may be understood that specific descriptions of the receiving unit 10 and the sending unit 20 shown in this embodiment of this application are merely examples. For specific functions or steps performed by the receiving unit 10 and the sending unit 20, refer to the method embodiments shown in FIG. 5 to FIG. 7A and FIG. 7B. Details are not described herein again. In addition, for technical effects of this embodiment of this application, refer to the technical effects in the method embodiments shown in FIG. 5 to FIG. 7A and FIG. 7B. For brevity, details are not described herein again.

Still refer to FIG. 8. In some other embodiments of this application, the communication apparatus may be the terminal device shown above, or a chip or a circuit disposed in the terminal device. In other words, the communication apparatus may be configured to perform steps, functions, or the like performed by the terminal device in the foregoing method embodiments.

In a design, the receiving unit 10 is configured to receive reference signals corresponding to N reference signal resources, where the reference signals are used for beam measurement, the N reference signal resources are in a one-to-one correspondence with N beams, and N is an integer greater than 1.

The sending unit 20 is configured to send first indication information, where the first indication information indicates a first reference signal resource, and the N reference signal resources include the first reference signal resource.

The receiving unit 10 is configured to receive reference signals corresponding to M reference signal resources, where the M reference signal resources are in a one-to-one correspondence with M beams, and M is a positive integer.

The sending unit 20 is configured to send second indication information, where the second indication information indicates a second reference signal resource, and the second reference signal resource is one of the first reference signal resource and the M reference signal resources.

In a possible implementation, the N reference signal resources and the M reference signal resources are different reference signal resources.

In a possible implementation, the N beams have a same first characteristic but a different second characteristic, and the M beams have a different first characteristic but a same second characteristic.

For example, the first characteristic is beam direction, and the second characteristic is beam shape.

For example, the first characteristic is beam shape, and the second characteristic is beam direction.

For example, the first reference signal resource is determined based on signal quality of the reference signals corresponding to the N reference signal resources.

For example, the second reference signal resource is determined based on signal quality of the reference signals corresponding to the M reference signal resources and signal quality of a reference signal corresponding to the first reference signal resource.

For example, the reference signal is either a channel state information reference signal CSI-RS or a synchronization signal and physical broadcast channel block SSB.

For example, the first indication information is a resource number of the first reference signal resource, and the second indication information is a resource number of the second reference signal resource.

It may be understood that specific descriptions of the receiving unit 10 and the sending unit 20 shown in this embodiment of this application are merely examples. For specific functions or steps performed by the receiving unit 10 and the sending unit 20, refer to the method embodiments shown in FIG. 5 to FIG. 7A and FIG. 7B. Details are not described herein again. In addition, for technical effects of this embodiment of this application, refer to the technical effects in the method embodiments shown in FIG. 5 to FIG. 7A and FIG. 7B. For brevity, details are not described herein again.

The foregoing describes the network device and the terminal device in embodiments of this application. The following describes possible product forms of the network device and the terminal device. It should be understood that any form of product that has functions of the network device or the terminal device described in FIG. 8 falls within the protection scope of embodiments of this application. It should be further understood that the following description is merely an example, and does not limit a product form of the communication apparatus in embodiments of this application.

In a possible implementation, the communication apparatus shown in FIG. 8 may further include a processing unit. The processing unit may be one or more processors. The sending unit 20 and the receiving unit 10 are integrated into one component, for example, a transceiver. Alternatively, the sending unit 20 may be a transmitter, and the receiving unit 10 may be a receiver. In embodiments of this application, the processor and the transceiver may be coupled, or the like. A connection manner between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information and inputs the information to the processor. Further, after the transceiver receives the information, other processing may need to be performed on the information before the information is input into the processor.

FIG. 9 is a diagram of another structure of a communication apparatus according to an embodiment of this application. As shown in FIG. 9, the communication apparatus provided in this embodiment of this application may be configured to implement the method described in the foregoing method embodiments. For details, refer to the descriptions in the foregoing method embodiments. The communication apparatus may be a network device, a terminal device, or a chip in the network device or the terminal device. For example, the communication apparatus includes one or more processors 1001 and a transceiver 1002. The communication apparatus may further include a memory 1003. In an implementation, the communication apparatus further includes an input/output apparatus (not shown in FIG. 9).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user, and output data to the user.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform steps, methods, or functions performed by the network device in the embodiment shown in FIG. 5, the transceiver 1002 may be configured to perform step S501 and step S503 in FIG. 5, and/or another process of the technology described in this specification.

For example, when the communication apparatus is configured to perform steps, methods, or functions performed by the terminal device in the embodiment shown in FIG. 5, the transceiver 1002 may be configured to perform step S502 and step S504 in FIG. 5, and/or another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions, and the instructions may be a computer program. The computer program is run on the processor 1001, to enable the communication apparatus to perform the method described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those in FIG. 9. This is not limited in embodiments of this application. The foregoing method performed by the processor and the transceiver is merely an example. For specific steps performed by the processor and the transceiver, refer to descriptions in the foregoing method embodiments.

In another possible implementation, the communication apparatus shown in FIG. 9 may further include a processing unit. The processing unit may be one or more logic circuits. A sending unit 20 and a receiving unit 10 may be input/output interfaces, or may be referred to as communication interfaces, interface circuits, interfaces, or the like. Alternatively, the sending unit 20 and the receiving unit 10 may be a sending unit and a receiving unit. The sending unit may be an output interface, and the receiving unit may be an input interface. The sending unit and the receiving unit are integrated into one unit, for example, an input/output interface.

FIG. 10 is a diagram of still another structure of a communication apparatus according to an embodiment of this application. As shown in FIG. 10, the communication apparatus shown in FIG. 10 includes a logic circuit 901 and an interface 902. To be specific, a processing unit may be implemented by the logic circuit 901, and a sending unit 20 and a receiving unit 10 may be implemented by the interface 902. The logic circuit 901 may be a chip, a processing circuit, an integrated circuit, a system on chip (system on chip, SoC), or the like. The interface 902 may be a communication interface, an input/output interface, a pin, or the like. FIG. 10 shows an example in which the communication apparatus is a chip. The chip includes the logic circuit 901 and the interface 902.

In this embodiment of this application, the logic circuit and the interface may further be coupled to each other. A specific manner of connection between the logic circuit and the interface is not limited in this embodiment of this application.

For example, when the communication apparatus is configured to perform steps, methods, or functions performed by the network device in the method embodiment shown in FIG. 5, the logic circuit 901 is configured to determine reference signals corresponding to N reference signal resources and reference signals corresponding to M reference signal resources, the interface 902 is configured to send the reference signals corresponding to the N reference signal resources, and the interface 902 is configured to send the reference signals corresponding to the M reference signal resources.

For example, when the communication apparatus is configured to perform steps, methods, or functions performed by the terminal device in the method embodiment shown in FIG. 5, the logic circuit 901 is configured to determine first indication information and second indication information, and the interface 902 is configured to send the first indication information and the second indication information.

In this embodiment of this application, for descriptions of the first indication information, the second indication information, and the like, refer to the descriptions in the method embodiments shown in FIG. 5. Details are not described herein again. It may be understood that for specific descriptions of the logic circuit 901 and the interface 902, refer to the descriptions of the processing unit, the sending unit, and the receiving unit shown in FIG. 9. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 10, refer to the foregoing embodiments. Details are not described herein again.

An embodiment of this application further provides a communication system. The communication system includes a network device and a terminal device. The network device and the terminal device may be configured to perform the method in any one of the foregoing method embodiments (FIG. 5 to FIG. 7A and FIG. 7B).

In addition, this application further provides a computer program. The computer program is used to implement an operation and/or processing performed by the network device in the method provided in this application.

This application further provides a computer program. The computer program is used to implement an operation and/or processing performed by the terminal device in the method provided in this application.

This application further provides a computer-readable storage medium. The computer-readable storage medium stores computer code. When the computer code is run on a computer, the computer is enabled to perform an operation and/or processing performed by the network device in the method provided in this application.

This application further provides a computer-readable storage medium. The computer-readable storage medium stores computer code. When the computer code is run on a computer, the computer is enabled to perform an operation and/or processing performed by the terminal device in the method provided in this application.

This application further provides a computer program product. The computer program product includes computer code or a computer program. When the computer code or the computer program is run on a computer, an operation and/or processing performed by the network device in the method provided in this application are/is performed.

This application further provides a computer program product. The computer program product includes computer code or a computer program. When the computer code or the computer program is run on a computer, an operation and/or processing performed by the terminal device in the method provided in this application are/is performed.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, and may be located in one position, or may be distributed on a plurality of network units. Some or all of the units may be selected according to an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the conventional technologies, or all or some of the technical solutions may be implemented in a form of a software product. The computer software product is stored in a readable storage medium, and includes a plurality of instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam measurement method for a three-dimensional antenna array, comprising:
sending reference signals corresponding to N reference signal resources, wherein the reference signals are used for beam measurement, the N reference signal resources are in a one-to-one correspondence with the N beams, and N is an integer greater than 1;
receiving first indication information, wherein the first indication information indicates a first reference signal resource, and the N reference signal resources comprise the first reference signal resource;
sending reference signals corresponding to M reference signal resources based on the first indication information, wherein the M reference signal resources are in a one-to-one correspondence with the M beams, and M is a positive integer; and
receiving second indication information, wherein the second indication information indicates a second reference signal resource, and the second reference signal resource is one of the first reference signal resource and the M reference signal resources.

2. The method according to claim 1, wherein the N reference signal resources and the M reference signal resources are different reference signal resources.

3. The method according to claim 1 or 2, wherein the N beams have a same first characteristic but a different second characteristic, and the M beams have a different first characteristic but a same second characteristic.

4. The method according to claim 3, wherein the first characteristic is beam direction, and the second characteristic is beam shape.

5. The method according to claim 3, wherein the first characteristic is beam shape, and the second characteristic is beam direction.

6. The method according to any one of claims 1 to 5, wherein the first reference signal resource is determined based on signal quality of the reference signals corresponding to the N reference signal resources.

7. The method according to any one of claims 1 to 6, wherein the second reference signal resource is determined based on signal quality of the reference signals corresponding to the M reference signal resources and signal quality of a reference signal corresponding to the first reference signal resource.

8. The method according to any one of claims 1 to 7, wherein the reference signal is either of a channel state information reference signal CSI-RS or a synchronization signal and physical broadcast channel block SSB.

9. The method according to any one of claims 1 to 8, wherein the first indication information is a resource number of the first reference signal resource, and the second indication information is a resource number of the second reference signal resource.

10. A beam measurement method for a three-dimensional antenna array, comprising:
receiving reference signals corresponding to N reference signal resources, wherein the reference signals are used for beam measurement, the N reference signal resources are in a one-to-one correspondence with the N beams, and N is an integer greater than 1;
sending first indication information, wherein the first indication information indicates a first reference signal resource, and the N reference signal resources comprise the first reference signal resource;
receiving reference signals corresponding to M reference signal resources, wherein the M reference signal resources are in a one-to-one correspondence with the M beams, and M is a positive integer; and
sending second indication information, wherein the second indication information indicates a second reference signal resource, and the second reference signal resource is one of the first reference signal resource and the M reference signal resources.

11. The method according to claim 10, wherein the N reference signal resources and the M reference signal resources are different reference signal resources.

12. The method according to claim 10 or 11, wherein the N beams have a same first characteristic but a different second characteristic, and the M beams have a different first characteristic but a same second characteristic.

13. The method according to claim 12, wherein the first characteristic is beam direction, and the second characteristic is beam shape.

14. The method according to claim 12, wherein the first characteristic is beam shape, and the second characteristic is beam direction.

15. The method according to any one of claims 10 to 14, wherein the first reference signal resource is determined based on signal quality of the reference signals corresponding to the N reference signal resources.

16. The method according to any one of claims 10 to 15, wherein the second reference signal resource is determined based on signal quality of the reference signals corresponding to the M reference signal resources and signal quality of a reference signal corresponding to the first reference signal resource.

17. The method according to any one of claims 10 to 16, wherein the reference signal is either a channel state information reference signal CSI-RS or a synchronization signal and physical broadcast channel block SSB.

18. The method according to any one of claims 10 to 17, wherein the first indication information is a resource number of the first reference signal resource, and the second indication information is a resource number of the second reference signal resource.

19. A communication apparatus, comprising a module or unit configured to perform the method according to any one of claims 1 to 18.

20. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 18 by using a logic circuit or by executing code instructions.

21. A readable storage medium, configured to store a program, wherein the program is executed by one or more processors, to enable an apparatus comprising the one or more processors to perform the method according to any one of claims 1 to 18.

22. A communication system, comprising a network device configured to perform the method according to any one of claims 1 to 9, and a terminal device configured to perform the method according to any one of claims 10 to 18.
